(19) Europäisches Patentamt
European Patent Office
Office européen des brevets

(11) Numéro de publication: **0 289 394**
**A2**

(12) # DEMANDE DE BREVET EUROPEEN

(21) Numéro de dépôt: **88400955.6**

(22) Date de dépôt: **20.04.88**

(51) Int. Cl.⁴: **C 01 F 11/00**
C 22 B 3/00

(30) Priorité: **29.04.87 FR 8706088**

(43) Date de publication de la demande:
**02.11.88 Bulletin 88/44**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Delloye, Thierry**
**91, rue Joseph Coursolle**
**F-77270 Villeparisis (FR)**

**Sabot, Jean-Louis**
**3, avenue Pascal**
**F-78600 Maisons-Laffitte (FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

(54) **Procédé de purification d'un sel de baryum.**

(57) L'invention a trait à un procédé de préparation d'un sel de baryum purifié, notamment à faible teneur en strontium, caractérisé en ce que l'on met en contact une solution aqueuse initiale de baryum avec un solvant organique comprenant une hydroxy-8 quinoléine à groupement méthylène-alkyle, pratiquement insoluble dans l'eau.

EP 0 289 394 A2

## Description

# PROCEDE DE PURIFICATION D'UN SEL DE BARYUM

La présente invention concern un procédé de préparation de composés à base de baryum purifiés.

Elle concerne plus particulièrement un procédé de préparation d'un sel de baryum purifié, notamment à faible teneur en strontium. Ce procédé peut être notamment appliqué avantageusement à la production de carbonate de baryum d'un haut degré de pureté, celui-ci pouvant servir de précurseur d'un titanate de baryum de même pureté.

En effet, la demande en sels de baryum de haute pureté est croissante en raison par exemple, du développement important des condensateurs céramiques à base de titante de baryum, ou des disques magnétiques à base d'hexaferrite de baryum.

Mais les minerais à base de baryum, qu'il s'agisse par exemple de sulfate comme dans la barytine ou de carbonate comme dans la withérite, contiennent de nombreuses impuretés, notamment du fer, du calcium, du sodium, et du strontium. D'autres impuretés, telles que le chlore ou le soufre, peuvent être introduites au cours des procédés classiques de fabrication du carbonate de baryum.

Or, si la plupart de ces impuretés accompagnant usuellement le baryum, peuvent être éliminées relativement facilement par des techniques classiques de précipitation/redissolution, l'élimination de traces de strontium reste encore un problème en raison de la grande similutude des propriétés chimiques de ces deux éléments.

On connaît certes des procédés de séparation du strontium et du baryum basés par exemple sur la chromatographie ou sur des échanges ioniques, mais il s'agit là plus de techniques de laboratoire permettant un dosage du strontium que de véritables procédés de séparation pouvant être exploités techniquement ou économiquement à l'échelle industrielle.

C'est ce qui a amené la Demanderesse à proposer dans la demande de brevet français n° 86 02791, un procédé industriel permettant de résoudre le problème de la séparation du strontium et du baryum en vue d'obtenir des sels de baryum de haute pureté. Le procédé décrit dans cette demande se caratérise par le fait que l'on met en contact une solution aqueuse initiale de baryum avec un solvant organique comprenant au moins un agent extractant pratiquement insoluble dans l'eau, agent extractant convenablement sélectionné au sein d'un ensemble constitué par des acides carboxyliques, des mono ester d'acides phosphoniques et des hydroxy-8- quinoléines, ce par quoi on obtient, après séparation des phases, une solution aqueuse finale de baryum purifiée constituant la production, et une phase organique chargée en impuretés, notamment en strontium.

Dans le cas où l'extractant est choisi dans la famille des hydroxy-8 quinoléines, on indique dans cette demande qu'il est particulièrement avantageux de travailler avec la (méthyl-1 éthyl-4 octyl)-7 hydroxy-8 quinoléine.

Bein que le procédé décrit se soit avéré présenter des performances remarquables au niveau de la purification en strontium tout en maintenant un nombre d'étages d'extraction relativement faible, donc compatible avec une marche industrielle, le taux d'élimination en cet élément peut, pour certaines application, être encore insuffisant.

Poursuivant ses travaux dans ce domaine, et plus particulièrement sur les hydroxy-8 quinoléines substituées, la Demanderesse a pu mettre en évidence que la nature et la position des radicaux sur une hydroxy-8 quinoléine ont une incidence marquée sur le pouvoir extractant du solvant ainsi que sur la sélectivité vis à vis du couple strontium/baryum.

Les résultats de ces travaux ont permis à la demanderesse de mettre au point un procédé de purification à efficicité améliorée permettant, à partir d'une solution initiale de baryum, d'aboutir à des composés à base de baryum dont la pureté soit encore augmentée, notamment vis à vis de l'élément strontium.

Le procédé selon l'invention de préparation d'un sel de baryum purifié, notamment à faible teneur en strontium, est caractérisé en ce que l'on met en contact une solution aqueuse initiale de baryum avec un solvant organique comprenant au moins un agent extractant pratiquement insoluble dans l'eau qui est une hydroxy-8 quinoléine de formule (I) :

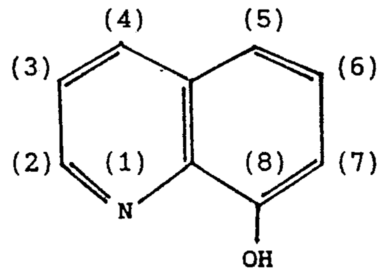

(I)

substituée par au moins un radical de formule (II) :

$-CH_2-R'$ (II)

dans laquelle R′ est choisi parmi les radicaux alkyles, alcenyles, alcynyles, alicycliques et aromatiques, ce par quoi l'on obtient, après séparation des phases, une solution aqueuse finale de baryum purifiée constituant la production, et une phase organique chargée en impuretés, notamment en strontium.

L'intérêt des solvants selon l'invention réside dans le fait qu'ils extraient préférentiellement le strontium, ce qui implique que les quantités de solvant à mettre en oeuvre restent limitées. Par ailleurs, les facteurs de séparation strontium/baryum obtenus sont suffisamment élevés pour que le nombre d'étages nécessaires à une purification donnée soit faible.

D'autres caractéristiques et avantages de l'invention seront mieux compris à la lecture de la description qui va suivre et d'exemples concrets mais non limitatifs de mise en oeuvre du procédé.

En amont du procédé, la matière première utilisée peut être de la barytine, minerai à base de sulfate de baryum, que l'on réduit en sulfure BaS par réaction avec du coke. Le sulfure de baryum est ensuite traité de manière connue en soi de façon à obtenir un carbonate de baryum de qualité standard, c'est-à-dire présentant une teneur en strontium couramment comprise entre 1 et 5 % en poids par rapport à la teneur en baryum (Sr/Ba).

Bien sûr, sans sortir du cadre de la présente invention, tout autre produit de départ contenant du baryum peut être utilisé.

Le carbonate de baryum ainsi obtenu est ensuite traité par un acide, notamment de l'acide chlorydrique ou de l'acide nitrique, ce par quoi l'on obtient respectivement une solution aqueuse de chlorure de baryum, ou une solution de nitrate de baryum. La teneur en strontium dans ces solutions est alors la même que celle précédemment citée. De telles solutions contiennent en outre des impuretés telles que notamment le sodium, le calcium, le fer, et le cas échéant du chlore et du soufre, dans des teneurs évidemment variables selon l'origine de la matière première utilisée, le procédé employé ou l'existence de pré-purifications antérieures en ces éléments.

C'est sur ces solutions, notamment de nitrate ou de chlorure de baryum, que peut être mis en oeuvre le procédé selon la présente invention. Toutefois, toute autre solution de sels de baryum solubles peut parfaitement convenir.

C'est ainsi qu'il s'est avéré particulièrement avantageux de travailler sur des solutions d'hydroxyde de baryum hydraté. En effet, d'une part ces solutions sont obtenues simplement par dissolution de l'hydroxyde solide dans l'eau, ce qui évite de procéder à une attaque acide d'un carbonate de baryum, et d'autre part, ces solutions sont telles que les conditions optimales de pH, telles que décrites ci-après, dans le milieu d'équilibre sont automatiquement remplies.

Le degré d'hydratation de l'hydroxyde peut être variable, et notamment égal à 1,3 ou 8.

Selon un mode préférentiel de mise de oeuvre de d'invention, on travaillera avec une solution d'hydroxyde de baryum octohydrate, de formule $Ba(OH)_2,8H_2O$.

La solution aqueuse initiale de baryum à purifier est donc mise en contact avec un solvant organique, comprenant au moins un agent extractant du type mentionné plus haut.

Cet agent extractant appartient à la famille des hydroxy-8 quinoléines substituées.

Selon l'invention, au moins un des radicaux substituants répond à la formule $-CH_2-R'$, c'est à dire que l'extractant possède au moins un groupement méthylène. Il peut aussi en posséder plusieurs.

Bien sûr, l'extractant peut posséder en outre d'autres radicaux substituants ne répondant pas à la formule $-CH_2-R'$.

Dans ce dernier cas, ces radicaux sont choisis, indentiques ou différents, parmi les radicaux alkyles, alcenyles, alcynyles, alicycliques ou aromatiques. Toutefois, dans ce cas encore, on préfère opérer avec des extractants possédant des radicaux substituants de type alkyle.

Il a été trouvé que les meilleurs résultats sont obtenus lorsqu'au moins un radical de formule $-CH_2-R'$ se trouve en position (5) ou en position (7).

Selon un mode préféré de mise en oeuvre de l'invention, on choisit un extractant ne possédant qu'un seul radical de formule $-CH_2-R'$, ce dernier étant donc situé préférentiellement en position (5) ou en position (7), et plus avantageusement encore en position (7). Dans ce dernier cas, il est préférable que l'extractant selon l'invention ne possède pas d'autre radicaux substituants. Cette dernière préférence joue également dans le cas où le seul radical répondant à la formule $-CH_2-R'$ se trouve en position (5).

En d'autres termes, conviennent particulièrement bein pour la mise en oeuvre du procédé selon l'invention, les hydroxy-8 quinoléines monosubstituées en position 5 ou en position 7, et de préference monosubstituées en position 7, par des radicaux de formule $-CH_2-R'$.

Il a été trouvé d'autre part qu'il est particulièrement avantageux de travailler avec un extractant dans lequel le radical R' tel que défini ci-avant est sélectionné dans le groupe des radicaux alkyles ou alcenyles, linéaires ou ramifiés. De préférence, le radical R' comprend alors entre 4 et 24 atomes de carbone, et encore plus préférentiellement, entre 7 et 14 atomes de carbone.

Ainsi, parmi les hydroxy-8 quinoléines monosubstituées en position 7 par des radicaux méthylène-alkyles ou méthylène-alcényles, conviennent notamment les (alkyl-n hexyl)-7 hydroxy-8 quinoléine, (n étant un entier compris entre 2 et 5) et plus particulièrement la (éthyl-2 hexyl)-7 hydroxy-8 quinoléine, ainsi que la dodécényl-7 hydroxy-8 quinoléine.

D'autre part, il est avantageux dans certains cas d'utiliser une phase organique qui comprend au moins un extractant du type précité en solution dans un diluant.

En effet, du fait de leurs propriétés physiques notamment, certains extractants ne peuvent pas être utilisés à l'état pur à l'extraction de la phase aqueuse initiale. Dans un tel cas, le diluant, outre son action solubilisante, a une action favorable sur les propriétés physiques du ou des extractants en diminuant par exemple la viscosité ou la densité de la phase organique.

A titre d'exemple, on pourra utiliser comme diluant, seul ou en mélange, des composés tels que des hydrocarbures aramatiques ou des hydrocarbures aliphatiques, saturés ou non. En particulier, le kérosène convient bein.

Les proportions diluant/extractant ne sont pas critiques. La concentration du ou des extractants dans le diluant peut être comprise entre 2 et 60 % en poids environ, par rapport à l'ensemble du solvant. Cette concentration est fonction notamment des propriétés physiques que l'on souhaite obtenir pour la phase organique initiale.

On peut être amené à ajouter au solvant organique un agent modificateur, afin d'éviter des problèmes de démixtion qui pourraient survenir lorsqu'on se trouve en milieu acide.

C'est ainsi qu'on pourra prendre des alcools à chaîne suffisamment longue pour qu'ils soient insolubles dans l'eau, par exemple du décanol. Les proportions en agent modificateur peuvent varier de 2 à 80 % en poids par rapport à l'ensemble du solvant, de préférence de 5 à 15 %.

La mise en contact entre la phase aqueuse initiale chargée en baryum et le solvant organique, ainsi que l'extraction, se fait de manière connue dans un appareillage de type mélangeur-décanteur ou colonne par exemple.

Avantageusement, l'extraction est réalisée en continu. Elle peut se faire à co-courant ou de préférence à contre-courant. Il est bien sûr possible d'utiliser un ou plusieurs étages.

A ce sujet, il est important de noter que par le choix d'un nombre d'étages suffisant, on peut arriver à des purifications en strontium aussi élevées que désirées, c'est-à-dire des teneurs en cet élément aussi faibles que de l'ordre de quelques ppm par rapport au baryum.

La température à laquelle se fait la mise en contact n'est pas critique. En pratique, cette température ira de l'ambiante à 70°C.

Les rapports volumiques des phases sont déterminés de mainère tout à fait classique par l'homme de l'art dans le cadre conventionnel des extractions liquide-liquide.

D'autre part, il peut être avantageux, pour une bonne mise en oeuvre du procédé selon l'invention, d'introduire une base dans le milieu d'extraction de manière à vérifier dans le milieu d'équilibre certaines conditions de pH. Ainsi, on aura intérêt à travailler à des pH supérieurs à 10 et plus particulièrement compris entre 11 et 13.

De telles conditions de pH pour de tels extractants favorisent la séparation baryum-strontium.

Pour ajuster le pH à de telles valeurs, toute base convenable sera utilisée lors de la mise en contact des solutions aqueuses et organiques. Toutefois, dans le cas de pH élevés, notamment supérieurs à 12, on pourra utiliser par exemple de la soude.

Selon un mode préférentiel de réalisation de l'invention, on obtiendra les conditions de basicité désirées par ajout de baryte, de formule $Ba(OH)_2$, $8H_2O$, ceci afin d'éviter un rajout d'impuretés notamment de sodium. Toujours dans ce même but, un autre mode préfé rentiel de réalisatio de l'invention consistera à utiliser de l'ammoniaque.

Après mise en contact puis séparation des deux phases, on obtient d'une part, une solution aqueuse finale substantiellement purifiée, notamment en strontium, qui consitute la production et d'autre part, une phase organique chargée en impuretés.

La phase organique précitée peut alors subir un lavage acide, notamment par l'acide nitrique, afin de récupérer l'éventuelle petite quantité de baryum extraite lors de l'étape précédente, puis une régénération par mise en contact avec une solution aqueuse acide, notamment nitrique ou chlorhydrique, et suivant des modalités similaires à celles décrites lors de la première étape d'extraction, ce par quoi l'on obtient, après séparation des phases, une phase aqueuse chargée notamment en strontium et une phase organique finale purifiée.

Selon un mode particulier de réalisation, ladite phase organique finale peut être réutilisée et recyclée à l'extraction des impuretés contenues dans la solution aqueuse initiale. Le système fonctionne ainsi en boucle fermée.

La solution aqueuse finale, constituant la production, peut éventuellement subir un traitement de purification supplémentaire, visant essentiellement à l'élimination du sodium. Dans le cas d'une solution de nitrate de baryum, ce traitement consiste en une cristallisation du sel de baryum par évaporation de la solution, ou bein en un ajout à ladite solution de nitrate de baryum d'une solution d'hydrogéno-carbonate d'ammonium, ce par quoi on obtient un précipité de carbonate de baryum de haute pureté.

Ce même traitement de carbonatation peut bein sûr être également appliqué sur des solutions de chlorure de baryum ou de baryte de manière à obtenir là encore des carbonates de baryum de haute pureté.

Ce nitrate ou ce carbonate trouve alors de nombreuses applications, notamment dans la fabrication de titanate de baryum de haute pureté.

Des exemples comparatifs concrets vont maintenant être donnés.

Conditions opératoires communes :

Une solution de baryte est obtenue par dissolution à 20°C de 60 kg de baryte octohydratée dans 1000 ml d'eau, et contenant en poids 1,92 % de strontium par rapport au baryum (Sr/Ba).

Cette solution alimente en continu une batterie de mélangeurs-décanteurs comportant huit étages théoriques d'extraction.

En contre-courant de la solution de baryte circule le solvant d'extraction composé de l'agent extractant dilué à raison de 0,22 M/l dans de kérosène.

Dans tous les cas, on décide de limiter à 20 % en poids les pertes en baryte par extraction. Ceci est réalisé en ajustant le rapport des débits d'alimentation de baryte et de solvant.

Le tableau I ci-après donne la pureté en strontium de la solution finale baryte, après les huit étages d'extraction, exprimée en poids par rapport au baryum, pour les trois exemples suivants :

Exemple comparatif 1

L'agent extractant utilisé est du type tel que décrit dans la demande de brevet français n° 86 02791. Il ne rentre donc pas dans le cadre particulier des agents extractants selon la présente invention.

Il s'agit d'une (méthyl-1 éthyl-4 octyl)-7 hydroxy-8 quinoléine commercialisée sous le nom de marque KELEX 100 (marque déposée par la Société SHERING).

Exemple 2

L'agent extractant utilisé est une (éthyl-2-hexyl)-7 hydroxy-8 quinoléine ($R' = C_7H_{15}$, donc sans insaturation) commercialisée sous le nom de marque KELEX 108 (marque déposée par la société SHERING). Ce produit rentre dans le cadre des extractants selon l'invention.

Exemple 3

L'agent extractant utilisé comprend une dodécenyl-7 hydroxy-8 quinoléine ($R' = C_{11}H_{21}$, donc avec une insaturation), et est commercialisé sous le nom de marque LIX 26 (marque déposée par la société HENKEL). Ce produit rentre également dans le cadre de la présent invention.

TABLEAU 1

| EXEMPLE | DEBIT SOLVANT / DEBIT BARYTE | TENEUR EN Sr |
|---|---|---|
| 1 | 1,11 | 180 ppm |
| 2 | 0,49 | 25 ppm |
| 3 | 0,59 | 6 ppm |

Ces résultats traduisent bien l'efficacité spectaculairement améliorée des extractants selon l'invention. En effet, et c'est un fait qui apparaitra surprenant pour l'homme de l'art, même avec des rapports débit solvant/débit baryte diminués par 2 par rapport à celui de l'exemple comparatif 1, on arrive pour les exemples 2 et 3 à des puretés finales en strontium diminuées respectivement par 2 et par 30.

Bien entendu, l'invention n'est nullement limitée aux modes de réalisation décrits qui n'ont été donnés qu'à titre d'exemples. En particulier, elle comprend tous les moyens constituant des équivalents techniques des

moyens décrits ainsi que leurs combinaisons si celles-ci sont mises en oeuvre dans le cadre de la protection comme revendiquée.

## Revendications

1/ Procédé de préparation d'un sel de baryum purifié, notamment à faible teneur en strontium, caractérisé en ce que l'on met en contact une solution aqueuse initiale de baryum avec un solvant organique comprenant au moins un agent extractant pratiquement insoluble dans l'eau qui est une hydroxy-8 quinoléine de formule (I) :

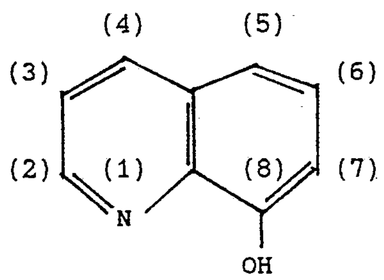

(I)

substituée par au moins un radical de formule (II) :

$-CH_2-R'$ (II)

dans laquelle R' est choisi parmi les radicaux alkyles, alcenyles, alcynyles, alicycliques et aromatiques, ce par quoi l'on obtient, après séparation des phases, une solution aqueuse finale de baryum purifiée constituant la production, et une phase organique chargée en impuretés, notamment en strontium

2/ Procédé selon la revendication 1 caractérisé en ce que les éventuels radicaux substituants autres que ceux de formule (II) sont choisis, identiques ou différents, parmi les radicaux alkyles, alcényles, alcynyles, alicycliques et aromatiques.

3/Procédé selon la revendication 2 caractérisé en ce que lesdits éventuels autres radicaux substituants sont des radicaux alkyles.

4/ Procédé selon l'une quelconque des revendications précédentes caractérisé en ce que le radical R' est un radical alkyle ou alcényle, linéaire ou ramifié.

5/ Procédé selon l'une quelconque des revendications précédentes caractérisé en ce que le radical R' comprend entre 4 et 24 atomes de carbone.

6/ Procédé selon la revendication 5 caractérisé en ce que ledit nombre de carbone est compris de préférence entre 7 et 14.

7/ Procédé selon l'une quelconque des revendications précédentes caractérisé en ce que au moins un radical de formule (II) est en position (5) ou en position (7).

8/ Procédé selon la revendication 7 caractérisé en ce que l'extractant a pour formule :

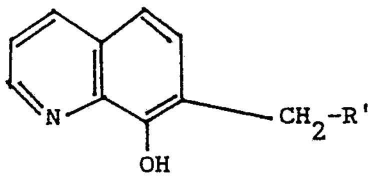

9/ Procédé selon la revendication 8 caractérisé en ce que l'extractant est une (alkyl-n-hexyl)7-hydroxy-8 quinoléine, n étant un entier compris entre 2 et 5.

10/Procédé selon la revendication 9 caractérisé en ce que l'extractant est une (éthyl-2 hexyl)-7 hydroxy-8 quinoléine.

11/Procédé selon la revendication 8 caractérisé en ce que l'extractant est une dodécényl-7-hydroxy-8 quinoléine.

12/Procédé selon l'une quelconque des revendications précédentes caractérisé en ce que le solvant organique comprend en outre au moins un diluant.

13/Procédé selon la revendication 12 caractérisé en ce que le diluant est un hydrocarbure aliphatique, saturé ou insaturé, et/ou un hydrocarbure aromatique.

14/Procédé selon la revendication 13 caractérisé en ce que le diluant est du kérosène.

15/Procédé selon l'une quelconque des revendications précédentes caractérisé en ce que le solvant organique comprend en outre au moins un agent modificateur.

16/Procédé selon la revendication 15 caractérisé en ce que l'agent modificateur est un alcool pratiquement insoluble dans l'eau, notamment le décanol.

17/Procédé selon l'une quelconque des revendications précédentes caractérisé en ce que l'on introduit dans le milieu d'extraction une base de manière à ce que le pH dans le milieu d'équilibre soit supérieur à 10, de préférence compris entre 11 et 13.

18/Procédé selon la revendication 17, caractérisé en ce que l'on obtient les conditions de pH précitées, par addition de baryte et'ou d'ammoniaque et/ou de soude lors de la mise en contact de la phase aqueuse initiale et de la phase organique.

19/ Procédé selon l'une quelconque des revendications précédentes caractérisé en ce que l'on met en contact la solution aqueuse initiale de baryum et le solvant organique en continu et soit, à co-courant soit, de préférence à contre-courant.

20/Procédé selon l'une quelconque des revendications précédentes caractérisé en ce que l'on met en contact la phase organique chargée en impuretés précitée avec une solution aqueuse acide, notamment d'acide chlorhydrique ou d'acide nitrique, ce par quoi on obtient, après séparation des phases, une phase organique finale purifiée et une phase aqueuse chargée notamment en strontium.

21/Procédé selon la revendication 20 caractérisé en ce que la phase organique finale purifiée est recyclée pour être mise en contact avec la solution aqueuse initiale de baryum.

22/Procédé selon l'une quelconque des revendications précédentes caractérisé en ce que la solution aqueuse initiale de baryum à purifier est une solution de nitrate de baryum.

23/Procédé selon la revendication 22 caractérisé en ce que l'on procède à une cristallisation du nitrate de baryum présent dans la solution aqueuse finale de baryum purifiée.

24/Procédé selon l'une quelconque des revendications 1 à 21 caractérisé en ce que la solution aqueuse initiale de baryum à purifier est une solution de chlorure de baryum.

25/Procédé selon l'une quelconque des revendications 1 à 21 caractérisé en ce que le solution aqueuse initiale de baryum à purifier est une solution d'hydroxyde de baryum hydraté.

26/Procédé selon la revendication 25 caractérisé en ce que l'on utilise une solution d'hydroxyde de baryum octohydrate.

27/Procédé selon l'une quelconque des revendications 1 à 22 et 24 à 26 caractérisé en ce que l'on ajoute à la solution aqueuse finale de baryum purifié une solution d'dydrogèno-carbonate d'ammonium, ce par quoi l'on obtient un précipité de carbonate de baryum purifié, notamment en strontium.